# EUROPEAN PATENT SPECIFICATION

(11) **EP 4 550 859 B1**
(45) Date of publication and mention of the grant of the patent: **14.10.2026**
(21) Application number: 24208085.1
(22) Date of filing: 22.10.2024
(51) Int. Cl.: H04W 4/80, H04L 67/141, H04L 41/082, H04L 41/0823, H04L 67/565

(54) **DISTRIBUTING UPDATED CONFIGURATIONS TO INDUSTRIAL DEVICES**
VERTEILUNG AKTUALISIERTER KONFIGURATIONEN AN INDUSTRIEVORRICHTUNGEN
DISTRIBUTION DE CONFIGURATIONS MISES À JOUR À DES DISPOSITIFS INDUSTRIELS

(30) Priority: 30.10.2023 US 202318497711
(43) Date of publication of application: 07.05.2025
(73) Proprietor: Rockwell Automation Technologies, Inc., Mayfield Heights, OH 44124 (US)
(72) Inventor: Koh, See Yong, Mayfield Heights, Ohio, 44124 (US); Junhong, Jeremy Pan, Mayfield Heights, Ohio, 44124 (US); Mazur, David C., Mayfield Heights, Ohio, 44124 (US); Mills, Jonathan A., Mayfield Heights, Ohio, 44124 (US); Day, Scott D., Mayfield Heights, Ohio, 44124 (US); Woszczyna, Patryk, Mayfield Heights, Ohio, 44124 (US); Gornikowski, Lukasz, Mayfield Heights, Ohio, 44124 (US)
(74) Representative: Grünecker Patent- und Rechtsanwälte PartG mbB

(56) References cited:
- US-A1- 2015 287 318
- US-A1- 2018 279 066
- US-A1- 2023 052 998

## Description

### TECHNICAL FIELD

Aspects of the disclosure are related to the field of industrial devices within industrial applications, in particular, to processes for distributing updated configurations to industrial devices.

### BACKGROUND

In the realm of industrial applications, configuring industrial devices is a pivotal technical endeavor that involves tailoring the settings and parameters of industrial devices to suit specific operational needs. System developers design the configurations to optimize performance, energy efficiency, and safety across a wide array of industrial machinery. The process typically encompasses setting parameters like motor speed, torque limits, acceleration and deceleration profiles, and control modes to align with the precise demands of the application. Moreover, industrial device configurations often integrate sophisticated control algorithms and communication interfaces to enable seamless integration into larger automation systems, such as programmable logic controllers (PLCs) or supervisory control and data acquisition (SCADA) systems. This technical customization not only ensures that the industrial device function in harmony with other equipment but also enhances overall system reliability and the ability to respond to real-time production variations, making it a fundamental aspect of modern industrial automation.

Industrial devices commonly run into issues, and updating configurations for a respective industrial device is often necessary to address the issue. For example, a motor drive issues an error notification due to a motor malfunction or a power surge. To address the error identified by the motor drive, an analysis of the current configuration of the motor drive is performed, and an updated configuration is identified to address the issue.

Extracting and updating configuration information for industrial devices, however, can be a burdensome and dangerous task. Using existing options, a worker extracts or updates a configuration for an industrial device by physically connecting a handheld device, such as a laptop or tablet, to the industrial device. Generally, each industrial device takes 5-10 minutes to configure. Since industrial applications, such as operation or manufacturing facilities, typically house hundreds if not thousands of industrial devices, individually configuring each industrial device is time and resource intensive. Moreover, since industrial devices are generally configured after they are installed in the field or facility, a worker performing the configuration typically has to don personal protection equipment (PPE), thereby adding to the time intensity of the configuration process.

Moreover, since industrial devices are located within an industrial application, access to the industrial devices for the configuration process can be complicated and at times unsafe. For example, industrial devices located within an oil refinery may be located in areas containing noxious fumes or dangerous equipment. As such, accessing the industrial devices or remaining for extended periods of time within the facility to physically connect to the industrial device for configuration purposes, poses safety and health concerns for the configuring worker.

Accordingly, there is a need for improved systems and methods for analyzing current configurations and updating configurations for industrial devices within industrial applications.
US 2015/287318 A1 relates to an industrial-enabled mobile device. The mobile device is enabled to interact with industrial devices to carry out industrial functions. Applications leverage peripherals of the mobile device to capture or retrieve information about an industrial device or information stored thereon, and to process this information to assist the user in discovering information about the industrial device, sending instructions to the industrial device and configuring the industrial device. The mobile device writes data or sends command signals to the industrial device via the mobile device's wireless interface.
US 2018/279066 A1 relates to a method and system for sharing a telematics access point. A method and system are provided for sharing a telematics access point that is used on agricultural machines and vehicles in the farming environment, and provides such a way to give telematics capabilities and access to agricultural machines and vehicles in a fleet without requiring each machine and vehicle to be equipped with a cellular telematics modem and/or a subscription for cellular internet access.
US 2023/052998 A1 relates to systems and methods for configuring industrial devices through a secured wireless side channel. A compute device comprises primary communication circuitry configured to communicate through a network, side channel communication circuitry configured to communicate through a secure wireless side channel that is different from the network, and circuitry configured to obtain, via the side channel, configuration data indicative of a configuration for operations of an industrial device and to configure the operations of the industrial device.

### SUMMARY

It is the object of the present invention to simplify and improve checking and updating configuration information with a reduced risk for errors.
This object is solved by the subject matter of the independent claims.
Preferred embodiments are defined by the dependent claims.

Technology disclosed herein includes software applications and services for updating a configuration of an industrial device. In particular, a configuration distribution process is provided herein for establishing a secure session between an industrial device and an end-point device, such as a service application or provider. In an aspect, the configuration distribution process provided herein includes establishing, by a client device, a first channel with an industrial device. The first channel is established using a short-range communications protocol, such as near-field communication (NFC) or Bluetooth. The client device also establishes a second channel with an end-point device. The end-point device may be another client device at another location, may be a cloud-service, or may be a service provider.

Using the first channel, a software application executing the configuration distribution process on the client device, extracts configuration information from the industrial device. Once extracted, the software application generates modified configuration information based on the configuration information extracted from the industrial device. For example, the configuration information may be a binary protocol and the software application may modify the binary protocol into text, such as an email, document, or Short Message Service (SMS) message. Once the modified configuration information is generated, the client device transmits the modified configuration information to the end-point device via the second channel.

As will be described below, the software application creates a bridge between the industrial device and the end-point device. The bridge may be a secure session in which any communications between the industrial device and the end-point device are automatically routed, via the software application running on the client device, between the industrial device and the end-point device. That is, the client device may act as a server by automatically routing configuration information between the industrial device and the end-point device.

As can be appreciated, the configuration distribution process provided herein, including the extraction and updating configuration techniques, provide for an improved means of distributing updated configuration information for industrial devices. Not only does the configuration distribution process improve the efficiency and safety of the extraction and configuration distribution process, but the configuration distribution process reduces human error in extracting and transmitting configuration information to an end-point device and flags issues for industrial devices without requiring human identification of the issue.

This Summary is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an environment for providing a configuration distribution process, according to an embodiment herein;
Figure 2 illustrates another environment for providing a configuration distribution process, according to an embodiment herein;
Figure 3 illustrates a configuration distribution process, according to an embodiment herein;
Figure 4 illustrates a flow diagram of the configuration distribution process, according to an embodiment herein;
Figures 5A-5DD illustrate example graphical user interfaces (GUIs) of a flow for the configuration distribution process, according to an embodiment herein;
Figure 6 illustrates an example industrial device, according to an embodiment herein; and
Figure 7 shows an example client device suitable for providing a configuration distribution process, according to an embodiment herein.

### DETAILED DESCRIPTION

As noted above, configuring industrial devices within industrial applications using conventional techniques is time intensive, burdensome, and at times, unsafe. Generally, industrial applications, such as production facilities, include hundreds if not thousands of industrial devices. Industrial devices perform a variety of functions within industrial applications, including operating and controlling processes within the industrial application. A common example of an industrial device is a drive. Drives, such as motor drives, optimize performance, safety, and energy efficiency of industrial machinery, such as conveyors, pumps, and robotic equipment. Other examples of industrial devices can include, but are not limited to, actuators, controllers, instrumentation, and the like.

An important part of utilizing an industrial device is the configuration process. Configuring an industrial device involves tailoring a variety of settings and parameters for the industrial device based on the specific application of the industrial device. That is, the configuration settings and parameters for an industrial device are designed to meet the specific requirements of an operation process. For example, configuration for an industrial device can include operating parameters, such as motor speeds, torque limits, load limits, control modes, and the like.

In some cases, configuration of an industrial device includes configuring identification information for the industrial device. Often, industrial devices are integrated into larger automation systems, such as PLCs or distributed communication systems (DCSs). As such, configuring the identification information for the industrial device can be a vital part of the overall system configuration process. For example, if the industrial application includes 50 motor drives, each running a different part of the industrial process, configuring each motor drive to have individual identification information is important for controlling the overall system. In other words, since each motor drive likely requires different operational parameters, being able to readily and easily identify what motor drive is associated with what piece of industrial equipment or part of the industrial process is important.

Configuration of an industrial device is also an important component of addressing issues that may arise during a manufacturing process. Since the configuration of an industrial device contains the operating parameters of the industrial device and often impacts associated industrial equipment, when issues arise within the industrial process, configuration information of industrial devices is often a starting point for addressing the issue. For example, when addressing issues within an industrial application, the configuration information of an industrial device associated with the issues is often the starting point for resolving the issue.

Current techniques for extracting configuration information from industrial devices and configuring industrial devices, such as with updated configuration information, require a client device, such as a laptop or tablet, to physically connect to an industrial device. Once connected, traditional configuration processes generally take between five and 10 minutes. Since industrial facilities commonly have hundreds if not thousands of industrial devices, configuring industrial devices is often time and cost intensive.

Moreover, because industrial devices are installed within manufacturing or industrial facilities, accessing and spending extended periods of time at the location of the industrial devices can pose health and safety risks. For example, many manufacturing facilities contain dangerous equipment that can pose risks to workers who are performing the configuration process or industrial devices within the manufacturing facility are placed in locations at make accessing them dangerous.

For extraction processes, conventional techniques are also burdensome. Beyond also requiring physical connection between the client device and the industrial device, once the configuration information is extracted from the industrial device, a user of the client device has to manually modify the configuration information into a format that is appropriate for communicating with an end-point device, such as technical service provider or cloud service. Since configuration information is generally in a format that is executable by the industrial device, the configuration information itself may not be useful to an end-point device. For example, the configuration information may be a binary command protocol for the industrial device. As such, to address any issues with the configuration of the industrial device, the configuration information is converted into another format that is legible to a worker. As used herein, configuration information that is converted into another format is referred to as "modified configuration information."

As noted above, this extraction process is traditionally a manual process completed by the operator of the client device. Once the configuration information is converted into modified configuration information, to receive assistance with addressing any issues, conventional techniques require a user of the client device to call or otherwise communicate with a technical service provider or end-point device to discuss the modified configuration information. As can be appreciated, not only are conventional techniques time intensive because they require a user of the client device to physically connect to the industrial device, but they also require the user of the client device to manually convert configuration information into an appropriate format for addressing issues with the configuration information.

Furthermore, conventional techniques require a user of the client device to identify the issues with the industrial device. As such, if an issue arises that a worker does not notice or readily appreciate, the issue may perpetuate. As can be appreciated, failing to address an issue for an industrial device may cause downstream issues, even cause property damage or risk to the facility's workers' health and safety.

To provide a safe and effective process for extracting and updating configurations for industrial devices within industrial applications, improved systems and methods are provided herein. Specifically, techniques for establishing a secure session between an industrial device and an end-point device are provided herein. As will be described in greater detail below, the configuration distribution processes provided herein allow for a secure channel to be established between a client device and an industrial device and another secure channel to be established between the client device and an end-point device. Once the secure channels are formed, the client device may act as a server by automatically routing communications between the industrial device and the end-point device. The bridge formed by the client device between the industrial device and the end-point device provides a secure session between the two, thereby allowing for secure and direct communication exchange between the end-point device and the industrial device.

The configuration distribution process provided herein also extracts the configuration information from the industrial device using a short-range communication protocol, such as NFC or Bluetooth. This allows for the client device to extract the configuration information without physically connecting it with the industrial device. For example, using NFC as the connection protocol, a user can use a client device executing the software that extracts configuration information from an industrial device by tapping the industrial device. As can be appreciated, not only is this more efficient than conventional techniques but it also is safer for the worker who is performing the extraction.

Additionally, the configuration distribution process also generates modified configuration information based on the configuration information extracted from the industrial device. Since conventional techniques require manual generation of the modified configuration information, the configuration process not only provides a more efficient means of generating modified configuration information, but it also reduces errors in the modified configuration information. Because generation of modified configuration information using conventional techniques is performed manually, errors are bound to happen due to a variety of reasons on the worker's front (e.g., exhaustion, preoccupation, rushing). As such, moving away from manual generation of modified configuration information can prevent these errors.

In sum, distributing updated configurations for industrial devices using the disclosed techniques offers many benefits. For example, the techniques provided herein save configuring users time and cost by extracting configuration information via a single tap between the client device and the industrial device and modifying the extracted configuration information to a format that can readily be transmitted to an end-point device. Moreover, the techniques herein provide a secure session between an end-point device and the industrial device, thereby not requiring a configuring worker to be a middleman between the end-point device and the industrial device to address any issues with the industrial device. As can be appreciated, this saves the configuring worker's time, as well as cost for the industrial facility by providing a fast response time to issues and reducing human error in communications between the industrial device and the end-point device. Furthermore, the techniques herein automatically route configuration information to the end-point device in the event of an issue. This can prevent issues going unaddressed by workers, thereby safeguarding against property damage, a reduction in production due to the issues, and, in some cases, a reduction in safety risk to the industrial facility.

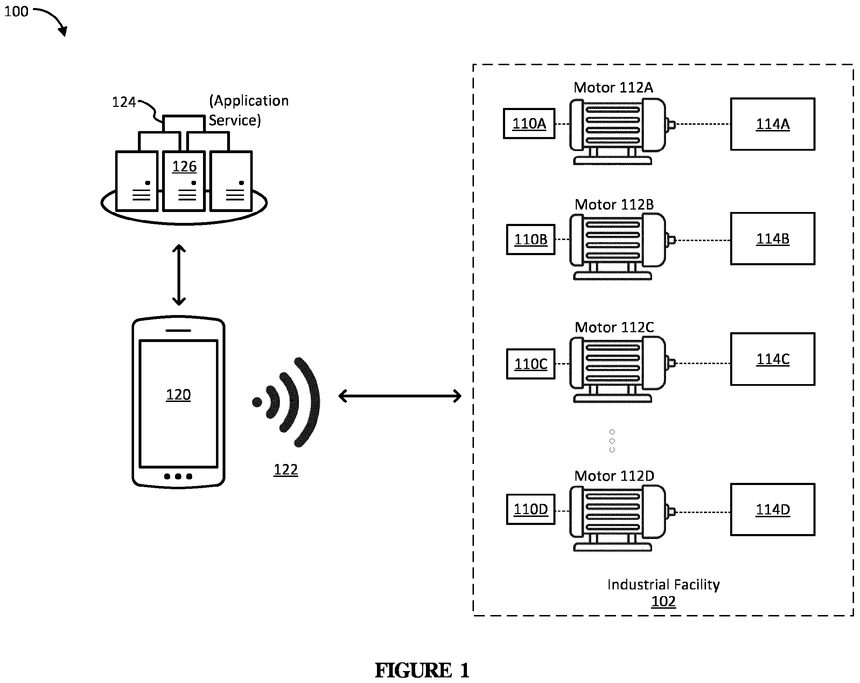

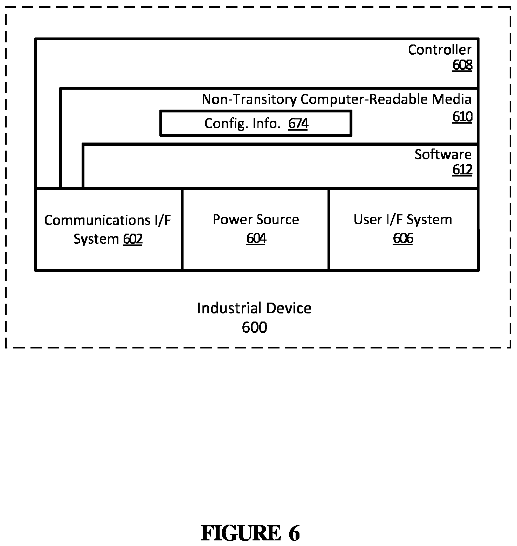

Turning now to **Figure 1,** Figure 1 illustrates an environment 100 for providing a configuration distribution process, according to an embodiment herein. As illustrated, the environment 100 includes an industrial facility 102 and a client device 120. The industrial facility 102 includes a group of industrial devices 110A, 110B, 110C, and 110D. The industrial devices 110A-D may be any type of industrial device, such as for example, drives, actuators, compressors, motors, controllers, and the like, of which industrial device 600 in Figure 6 is broadly representative. It should also be appreciated that the industrial devices 110A-D may not all be the same type of industrial device. Instead, the industrial devices 110A-D may be a combination of different types of industrial devices.

In the illustrated example, the industrial devices 110A-D are drives associated with motors 112A, 112B, 112C, and 112D, respectively. The motors 112A-D may provide mechanical energy to a variety of industrial equipment 114A-114D, respectively. Examples of industrial equipment 114A-114D include a conveyor belt, a pump, or a robotic arm. As can be appreciated, because each of the industrial equipment 114A-114D may require different operating parameters, each respective industrial devices 110A-D may require individualized configuration.

Configuration of the industrial devices 110A-D may determine a variety of information associated with the industrial devices 110A-D. For example, configuration information for the industrial devices 110A-D may include operating parameters, such as, motor speed, torque limits, acceleration and deceleration profiles, and control modes. In another example, configuration information for the industrial devices 110A-D may also include identification and communication parameters, such as internet protocol (IP) addresses, device tag names, I/O information, and the like.

To extract configuration information from or update the configuration of one or more of the industrial devices 110A-D, the client device 120 first connects with a given industrial device. For ease of explanation, the remaining discussion will be with respect to industrial device 110A. To connect with the industrial device 110A, the client device 110 establishes a short-range protocol connection 122 with the industrial device 110A. Examples of short-range protocol connections include Bluetooth and near-field communication (NFC). To establish the short-range protocol connection 122 with the industrial device 110A, the client device 120 may scan a connection tag, such as an NFC tag, a bar code, or a quick response (QR) code, on the industrial device 110A. In some embodiments, the industrial device 110A may transmit a signal, such as a Bluetooth signal that allows the client device 120 to discover and connect with the industrial device 110A.

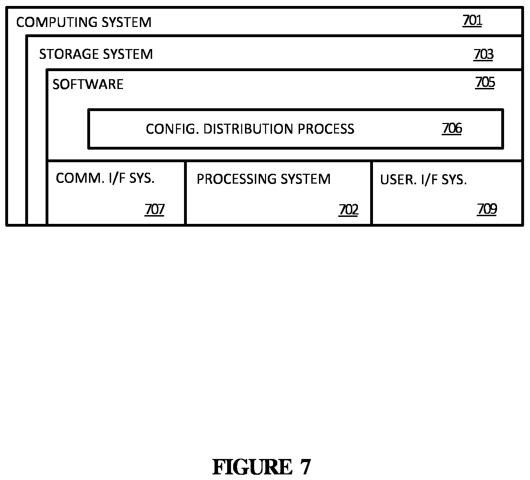

As illustrated, the environment 100 also includes an application service 124. The application service 124 employs one or more server computers 126 co-located with respect to each other or distributed across one or more data centers. Example servers include web servers, application servers, virtual or physical servers, or any combination or variation thereof, of which computing system 701 in Figure 7 is broadly representative.

The client device 120 communicates with application service 124 via one or more internets and intranets, the Internet, wired and wireless networks, local area networks (LANs), wide area networks (WANs), or any other type of network or combination thereof. Examples of the client device 120 include personal computers, tablet computers, mobile phones, gaming consoles, wearable devices, Internet of Things (IoT) devices, and any other suitable devices, of which computing system 701 in Figure 7 is also broadly representative.

Broadly speaking, the application service 124 provides software application services to end points, such as the client device 120. The client device 120 can load and execute software applications locally that interface with services and resources provided by the application service 124. The applications may be natively installed and executed applications, web-based applications that execute in the context of a local browser application, mobile applications, streaming applications, or any other suitable type of application. Example services and resources provided by the application service 124 include front-end servers, application servers, content storage services, authorization and authentication services, and the like.

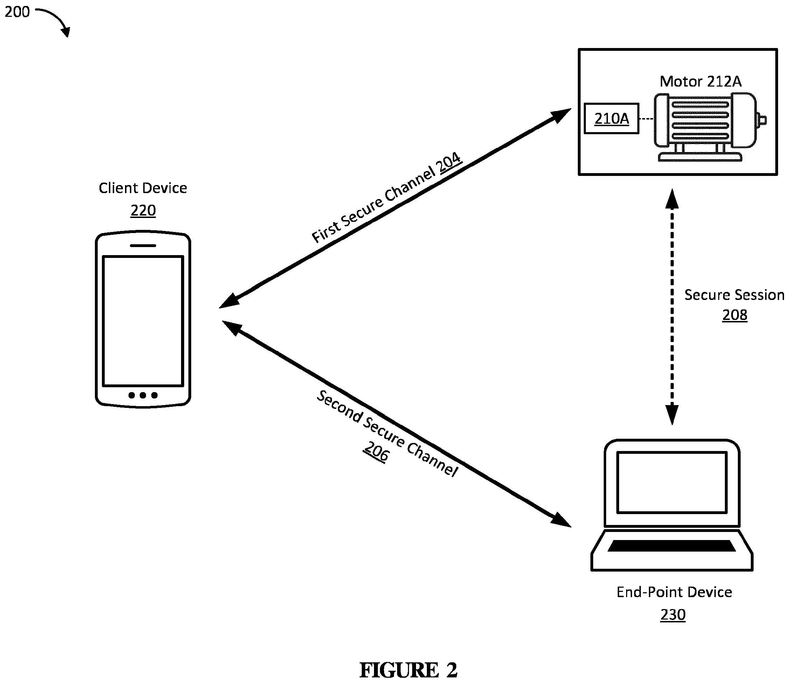

In the illustrated example, the application service 124 provides the client device 120 with one or more features of the configuration distribution process described herein. The following discussion of the configuration distribution process is made with respect to Figures 2-3. Starting with **Figure 2****,** an environment 200 for providing a configuration distribution process is illustrated, according to an embodiment herein. In particular, Figure 2 illustrates the environment 200 for establishing a secure session between an industrial device 210A and an end-point device 230.

The industrial device 210A may be an industrial device that is part of an industrial facility, such as the industrial device 110A as part of the industrial facility 102. As such, the industrial device 210A may be operably coupled to a piece of industrial equipment, such as motor 212A. That is, the industrial device 210A is configured with operating parameters such to operate the motor 212A as required within the industrial application. For ease of explanation, the following discussion will be within the context that there is an issue with the industrial device 210A and/or the motor 212A. However, it should be appreciated that the configuration distribution process 300 may be used within scenarios in which there is not an issue with the industrial device 210A or any related equipment.

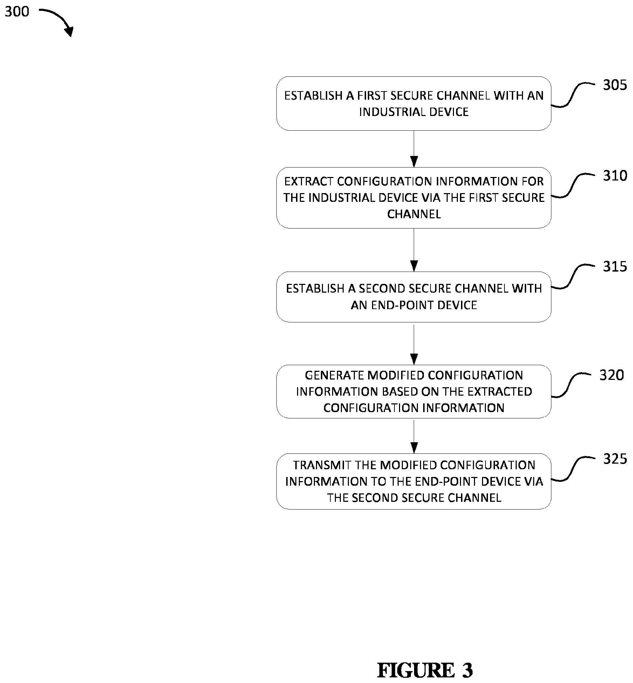

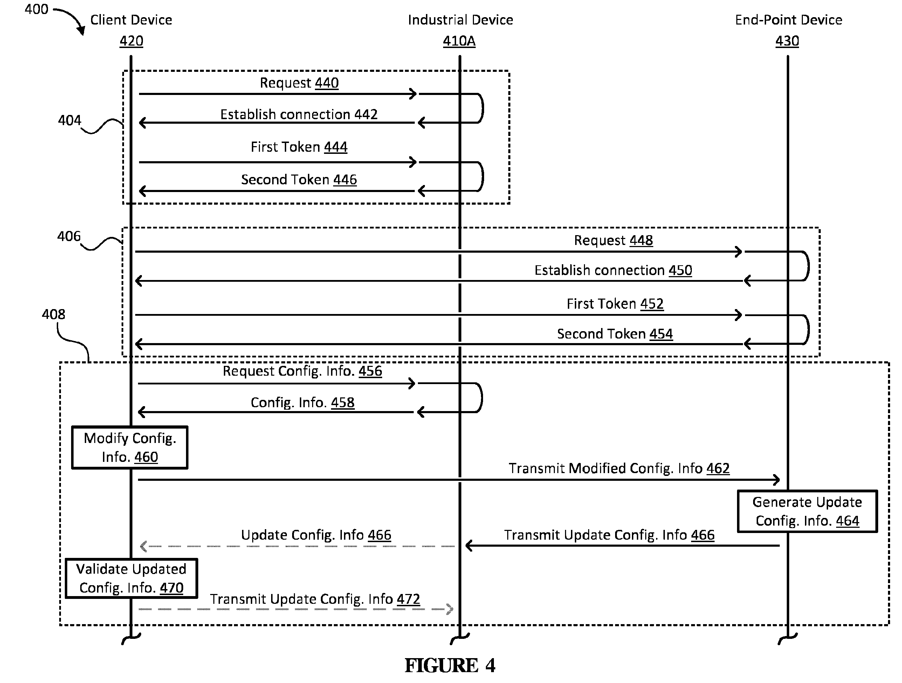

An issue has arisen with the industrial device 210A, requiring extraction of the configuration information for the industrial device 210A. To address the issue, the configuration distribution process provided herein is implemented. Referring now to **Figure 3****,** a configuration distribution process 300 is provided, according to an embodiment herein. For ease of discussion, the configuration distribution process 300 is described with reference to Figures 1 and 2, however, it should be appreciated that the configuration distribution process 300 may be performed by components and systems described in any of Figures 4-7.

As shown in Figure 2, as part of the configuration distribution process 300, a first secure channel 204 is established with the industrial device 210A (305). For example, a user of the client device 220 establishes a short-range protocol connection, such as via NFC or Bluetooth, to the industrial device 210A. To establish a short-range protocol connection, a user of the client device 220 may tap and hold the client device 220 close to an NFC tag provided on the industrial device 210A. The industrial device 210A may have an NFC tag, QR code, or a bar code that allows for quick and easy NFC or Bluetooth connection. As such, the client device 220 may employ a camera or other optical component to scan the NFC tag associated with the industrial device 210A. Once the client device 220 establishes the short-range protocol connection with the industrial device 210A, the first secure channel 204 is established between the client device 220 and the industrial device 210A. In some cases, once the first secure channel 204 is established, a notification may be transmitted to the client device 220 indicating that the connection was successfully established.

Once the first secure channel 204 is established, configuration information may be extracted from the industrial device 210A via the first secure channel 204 (310). For example, a software application that is hosted and executed by the application services 124, may automatically extract the configuration information from the industrial device 210A upon establishment of the first secure channel 204.

A second secure channel 206 is established by the client device 220 with an end-point device 230 (315). The end-point device 230 may be a cloud-based service or another client device. In an illustrative example, the end-point device 230 may be technical support for the industrial device 210A. In some embodiments, the client device 220 may use a software application executing on the client device 220 to establish the second secure channel 206 with the end-point device. In some embodiments, the second secure channel 206 is a different type of connection than the first secure channel 204. For example, the second secure channel 206 may be a Wide Area Network (WAN) connection, such as 3G, 4G, LTE, and 5G. In other embodiments, the second secure channel 206 may be the same type of connection as the first secure channel 204.

Once the second secure channel 206 is established, the software application executing on the client device 220 may establish a secure session 208 between the industrial device 210A and the end-point device 230. The secure session 208 may be a bridge, formed by the client device 220, between the industrial device 210A and the end-point device 230. In other words, the client device 220 may act as a server in that it automatically routes any communication between the end-point device 230 and the industrial device 210A to the respective device.

The secure session 208 may be understood to be a connection via which communications between the industrial device 210A and the end-point device 230 remain confidential and temper-proof. For example, the first secure channel 204 and/or the second secure channel 206 may be encrypted and authenticated channels. That is, the secure session 208 may be established to include cryptographic protocols to protect against eavesdropping, data manipulation, and unauthorized access. As such, the secure session 208 serves as a trustable conduit for confidential data transmission, safeguarding the privacy and integrity of any communication exchanged between the industrial device 210A and the end-point device 230.

After the configuration information is extracted from the industrial device 210A, the client device 220 generates modified configuration information based on the configuration information (320). That is, prior to transmitting the configuration information extracted from the industrial device 210A, the software application executing the configuration distribution process 300 on the client device, generates modified configuration information. As noted above, the configuration information extracted from the industrial device 210A is generally in a format that is executable by the industrial device, such as in binary or code. As such, prior to transmitting the configuration information to the end-point device 230, the client device 220 translates the configuration information into the modified configuration information. In other words, the client device 220 translates the configuration information from a first format into a second format (e.g., the modified configuration information).

As noted above, the generation of modified configuration information is traditionally performed manually. As such, errors commonly arise during this step in the process. By using the software application executing the configuration distribution process 300, in which the configuration information is automatically extracted from the industrial device 210A and used to generate modified configuration information, errors can be avoided, and the issue can be more easily rectified by the end-point device.

Once the modified configuration information is generated by the client device, the modified configuration information is transmitted to the end-point device 230 via the second secure channel 206 (325). It should be appreciated, these steps of the configuration distribution process 300 may automatically occur upon a command received from the client device 220. For example, the client device 220 may indicate to establish a secure session with the industrial device 210A or may indicate a request for help with the end-point device 230 to resolve the issue identified with the industrial device 210A. In still another example, the industrial device 210A itself may transmit a push notification to the client device 220 if it identifies an issue. For example, the industrial device 210A may experience a power surge and automatic to the power surge, transmit a notification to the client device 220 of the issue.

In some cases, once the secure session 208 is established with the industrial device 210A and the end-point device 230, the secure session 208 may perpetuate until ended by the client device 220. During the time that the secure session 208 is present, the industrial device 210A may automatically communicate with the end-point device 230, and the end-point device 230 may automatically communicate with the industrial device 210A without input from the client device 220. Following the above example in which the industrial device 210A experiences a power surge, the industrial device 210A may transmit a notification of the power surge, along with its configuration information to the end-point device 230 via the secure session 208. Since the communication is transmitted via the client device 220, the client device 220 may generate the modified configuration information upon receipt of the communication from the industrial device 210A and route the modified configuration information, along with the notification, directly to the end-point device 230.

Responsive to receiving the modified configuration information, the end-point device 230 may analyze the modified configuration information and provide updated configuration information for the industrial device 210A. The updated configuration information may address an identified issue present in the configuration information provided by the industrial device 210A. The end-point device 230 provides the updated configuration information to the industrial device 210A via the secure session 208. In other words, the end-point device 230 transmits the updated configuration information to the client device 220 via the second secure channel 206, which is then routed by the client device 220 to the industrial device 210A via the first secure channel 204.

In some embodiments, as part of the routing process of communications between the end-point device 230 and the industrial device 210A, the configuration distribution process 300 includes determining, by the software application executed on the client device 220, a binary command protocol for the industrial device 210A. The software application may also validate the binary command protocol for the industrial device 210A to confirm that the accuracy and validity of the binary command protocol. Once the binary command protocol is validated, the client device 220 via the software application, may transmit the updated configuration information to the industrial device 210A.

Referring now to **Figure 4****,** a flow diagram 400 of the configuration distribution process 300 is provided herein, according to an embodiment herein. Specifically, the flow diagram 400 illustrates a technique for establishing a secure session between an industrial device 410A and an end-point device 430. The industrial device 410A may be any type of industrial device, such as the industrial device 210A described above. Similarly, the end-point device 430 may be the same or similar to the end-point device 230.

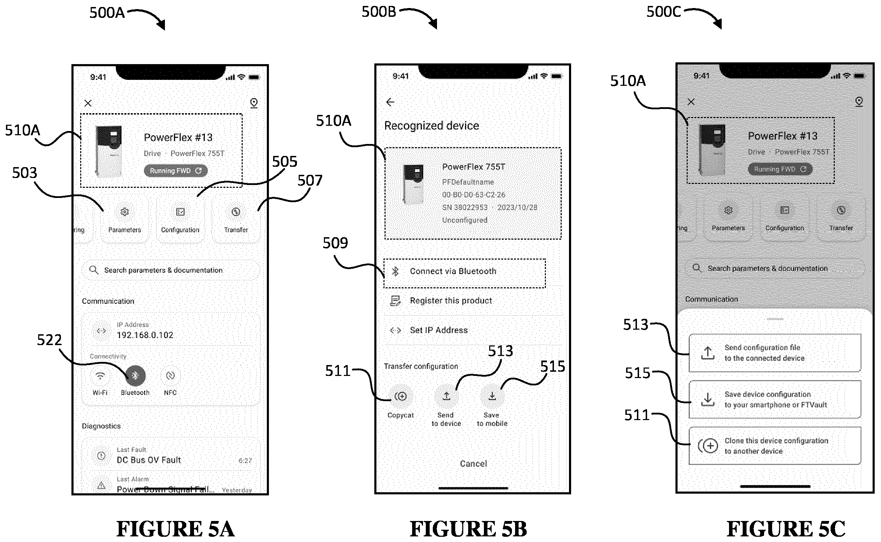

As illustrated, to establish a secure session between the industrial device 410A and the end-point device 430, a client device 420, transmits a request 440 to connect to the industrial device 410A. As will be described in greater detail below with respect to Figures 5A-DD, the request 440 may be transmitted by the client device 420 scanning a QR code, bar code, NFC code, and the like for the industrial device 410A. Upon receiving the request 440, the industrial device 410A may establish the connection 442 by, for example, granting the request 440. As part of the handshake to establish the connection 442, tokens or encryption keys may be exchanged between the client device 420 and the industrial device 410A. For example, a first token 444 may be transmitted by the client device 420 to the industrial device 410A, and the industrial device 410A may transmit a second token 446 to the client device 420. Those skilled in the art will appreciate that the exchange of the first token 444 and the second token 446 may occur as part of the request 440 and/or the establishment of connection 442. Once the tokens are exchanged, and the connection 442 is established, a first secure channel 404 is established between the client device 420 and the industrial device 410A. As noted above, the first secure channel 404 may be a short-range protocol connection, such as Bluetooth or NFC.

A second secure channel 406 is established between the client device 420 and the end-point device 430. In some cases, the second secure channel 406 may be established prior to establishing the first secure channel 404 or may be established simultaneously. To establish the second secure channel 406, a request 448 may be transmitted by the client device 420 to the end-point device 430. For example, the client device 420 may login to a cloud service and the request 448 may be made by providing login information via a login portal. Responsive to receiving the request 448, the end-point device 430 may establish the connection 450 with the client device 420.

The second secure channel 406 may also be a secure connection in which encryption keys or tokens are exchanged during establishment of the connection. For example, a first token 452 may be transmitted by the client device to the end-point device 430 and the end-point device 430 may transmit a second token 454 to the client device 420. Those skilled in the art will appreciate that the exchange of tokens 452 and 454 may occur as part of the request 448 and the establishment of the connection 450. After the second secure channel 406 is established, a secure session 408 is established between the industrial device 410A and the end-point device 430.

At some point after the secure session 408 is established, the client device 420 requests configuration information 456 from the industrial device 410A. Responsive to receiving the request for configuration information 456, the industrial device 410A transmits the configuration information 458 to the client device 420 via the secure session 408. Upon receiving the configuration information 458, the client device 420 generates modified configuration information 460. As described above, the configuration information 458 may be in a format that is readable by the industrial device 410A, such as in binary or code. As such, the client device 420, using a software application executing thereon the configuration distribution process provided herein, translates the configuration information 458 from a first format into a second format, thereby forming the modified configuration information 460.

Once generated, transmission 462 including the modified configuration information 460 is sent to the end-point device 430. The end-point device 430 may analyze the modified configuration information 460 and determine that updated configuration information 464 is required. As such, the end-point device 430 generates the updated configuration information 464 and sends transmission 466 the updated configuration information 464 to the industrial device 410A via the secure session 408. As described above, within the secure session 408, the client device 420 acts as a bridge between the industrial device 410A and the end-point device 430. As such, the transmission 466 may be sent to the client device 420 first before it is automatically routed to the industrial device 410A.

In some cases, the updated configuration information 464 is in a format that is not readable by the industrial device 410A. In such cases, the client device 420 may translate the format of the updated configuration information 464 into a format that is readable by the industrial device 410A. In other cases, such as the illustrated example, the updated configuration information 464 is in a readable format, such as a binary protocol command. In such cases, the client device 420 validates the updated configuration information 470 prior to sending the updated configuration information 464 via transmission 472 to the industrial device 410A. Upon receipt of the transmission 472, the industrial device 410A updates a current configuration with the updated configuration information 464. For example, the industrial device 410A updates the configuration information 458 with the updated configuration information 464.

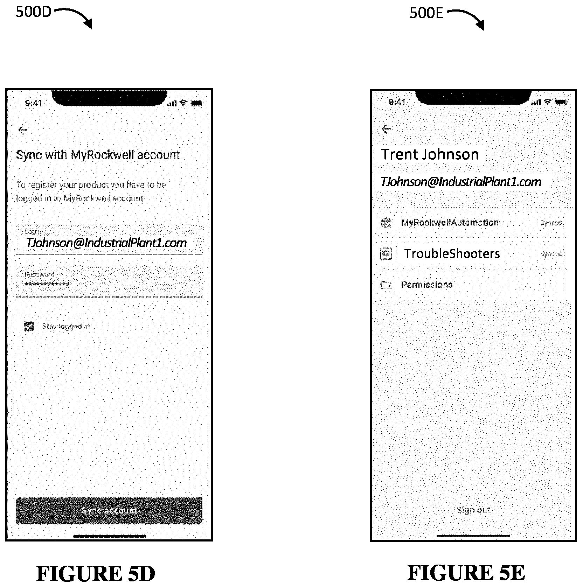

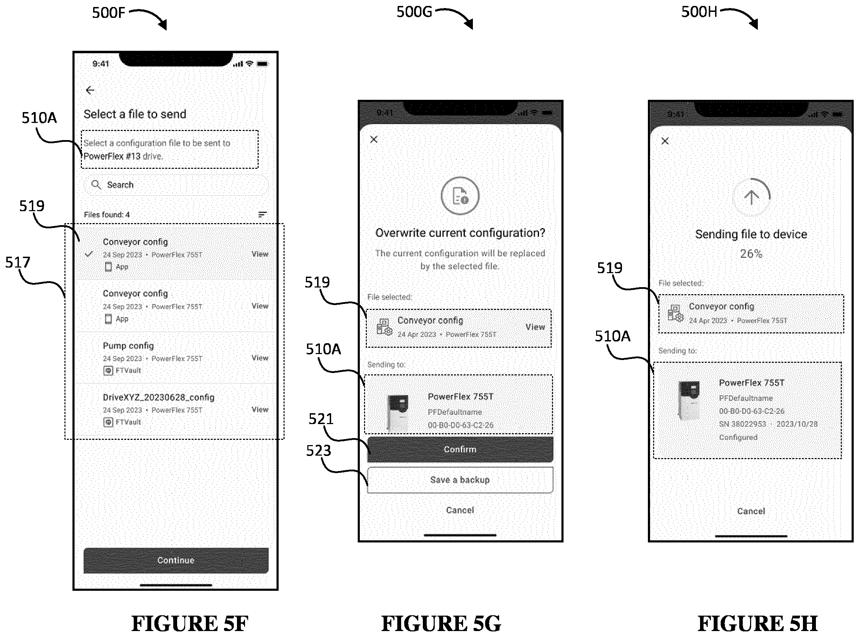

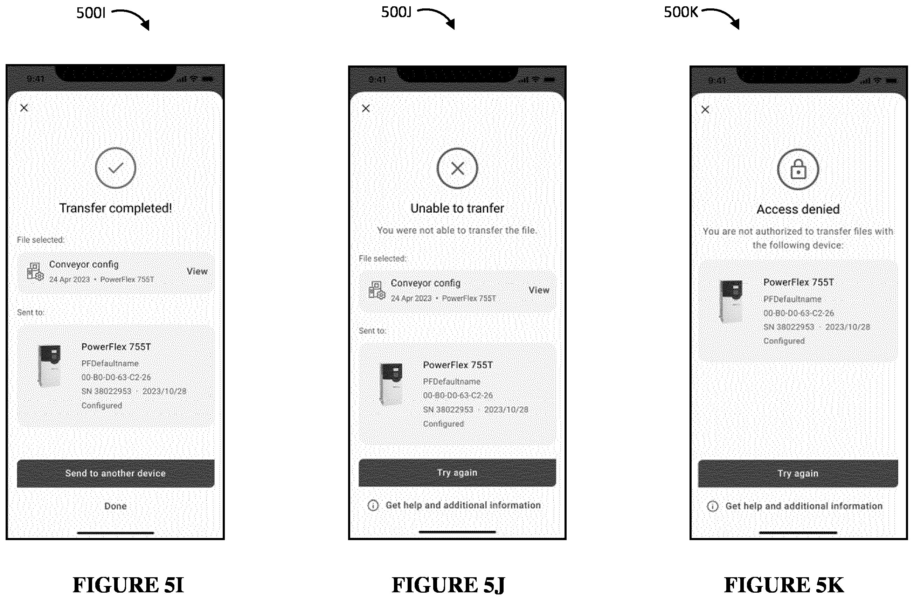

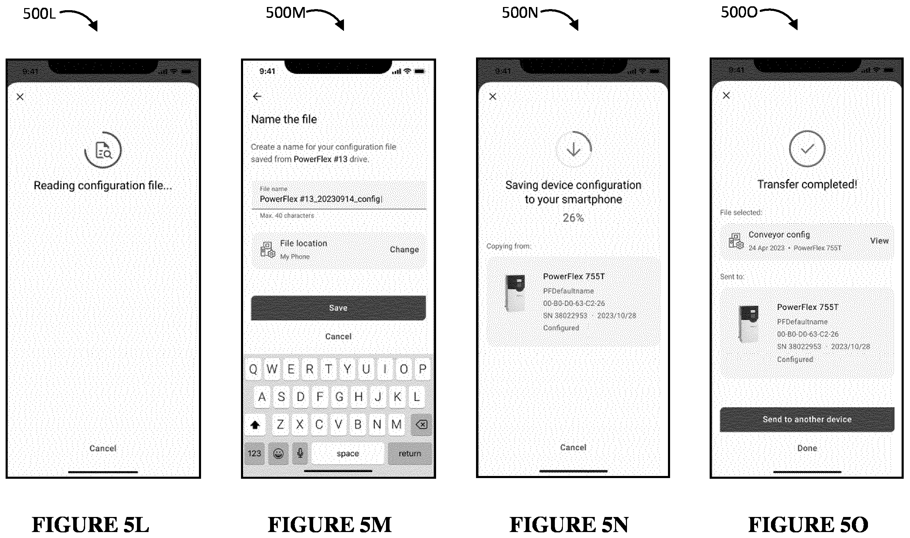

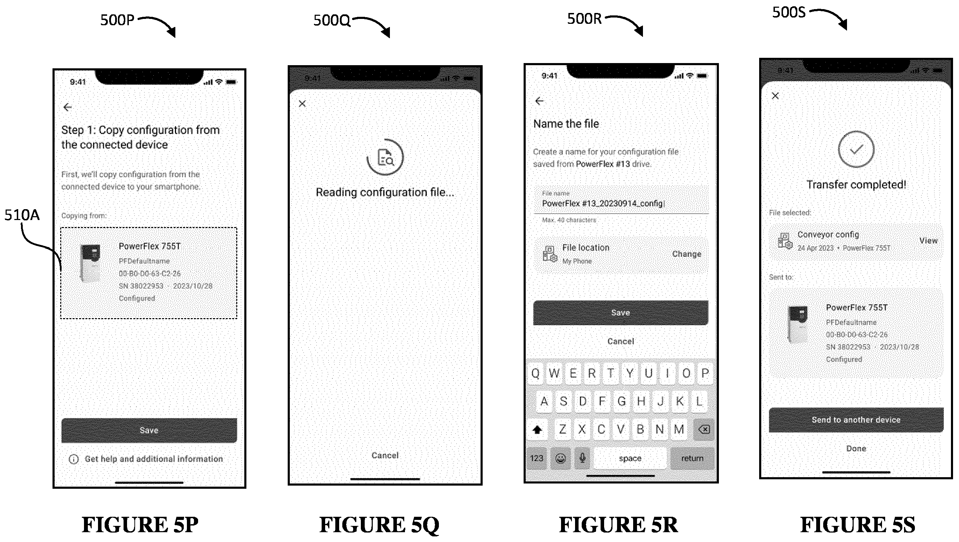

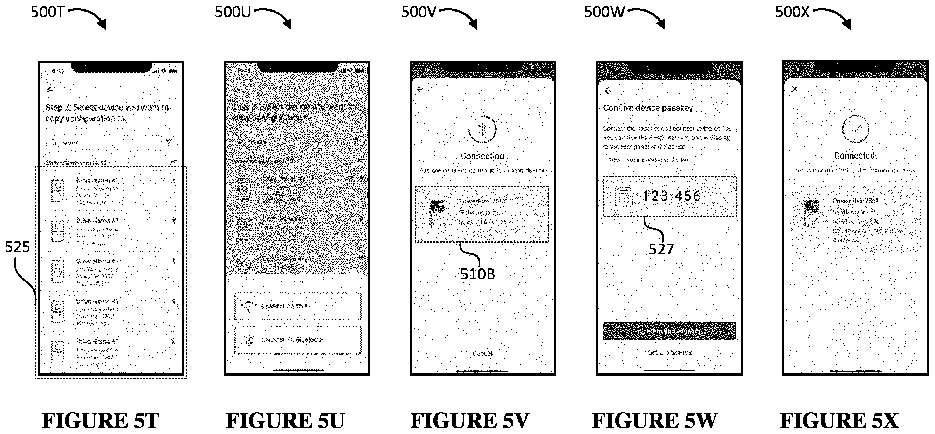

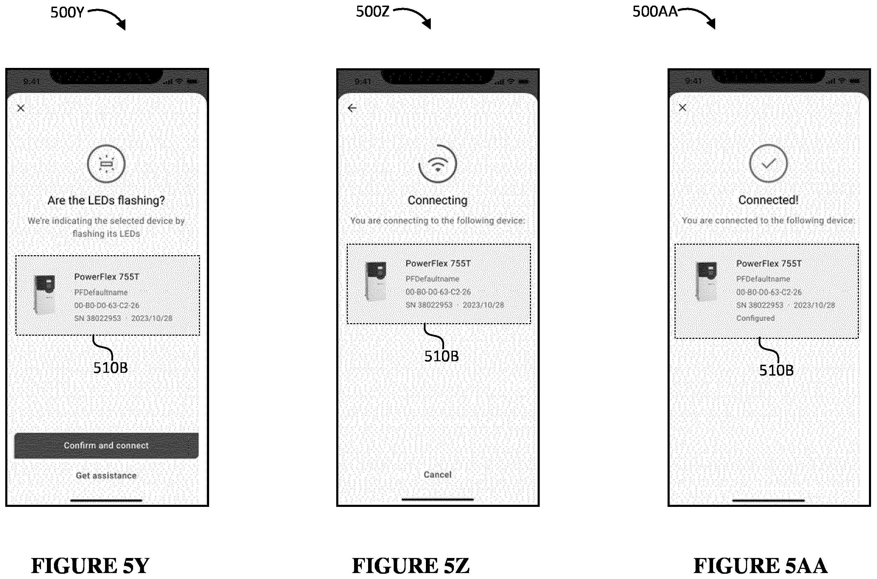

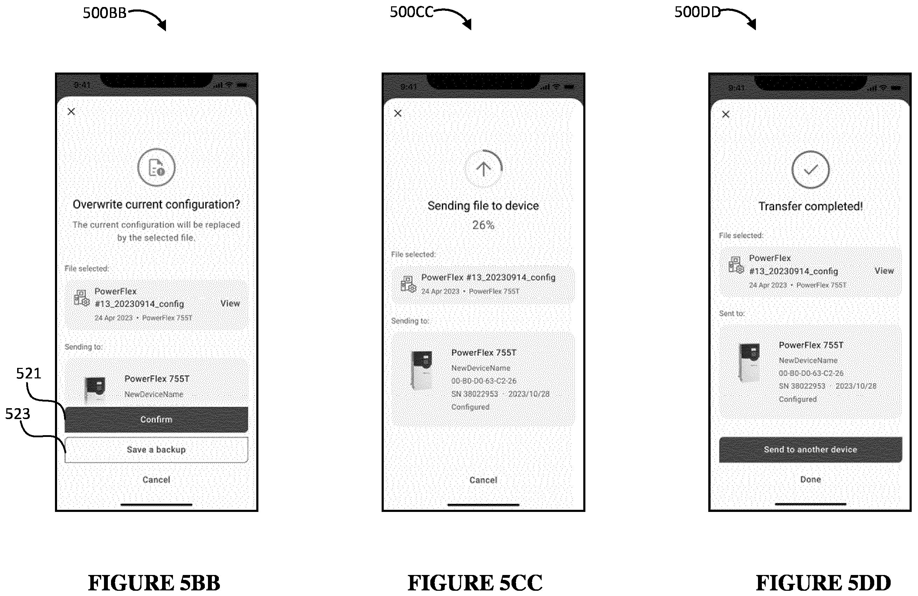

Turning now to **Figures 5A****-DD,** example GUIS illustrating a flow of various configuration distribution processes are provided, according to an embodiment herein. Figures 5ADD are described with reference to Figure 2, however, it should be appreciated that components and systems from any of the remaining Figures may also be used within the described GUIs. The GUIs illustrated in Figures 5A-DD may be provided via the client device 220 to a configuring user. It should be appreciated that Figures 5A-DD are exemplary interfaces of a software application, such as MyRockwell developed by ROCKWELL AUTOMATION, used in industrial automation environments. As such, the GUIs 500A-DD provided in Figures 5A-DD are not intended to be limiting to the illustrated examples.

Starting with Figures 5A-C, GUIs 500A, 500B, and 500C illustrate various entry points that the client device 220 may have for establishing the first secure channel 204 with an industrial device 510A, which may be the same or similar to the industrial device 210A. Figure 5A illustrates the GUI 500A in which the first secure channel 504 is established with the industrial device 510A from a previous connection. As illustrated, the first secure channel 504 is established via a Bluetooth connection 522. Once the first secure channel 204 is established, the GUI 500A provides various information for the industrial device 510A, such as parameters 503 and configuration information 505. The GUI 500A also provides a transfer option 507, which allows transfer of configuration information 505 from the industrial device 510A to the end-point device 230.

If the first secure channel 204 is not yet established between the client device 220 and the industrial device 510A, the GUI 500B may be provided. As illustrated by Figure 5B, the industrial device 510A is not yet connected to the client device 220. As such, option 509 to connect via Bluetooth is provided on the GUI 500B. Upon selecting the option 509, the client device 220 may establish a Bluetooth connection with the industrial device 510A, as described above. The GUI 500B also provides various options for the configuration information for the industrial device 510A. For example, the GUI 500B provides a copycat option 511 that, upon selection, copies the configuration information for the industrial device 510A and clones the configuration information to another industrial device. The GUI 500B also includes a send option 513 that, upon selection, sends updated configuration information to the industrial device 510A. For example, the client device 220 may have received updated configuration information from the end-point device 230. Additionally, the GUI 500B includes a save option 515 that, upon selection, saves the configuration information to the client device 220. Each of these options are walked through in greater detail below with respect to Figures 5F-DD.

Figure 5C illustrates the GUI 500C providing another example of the options 511-515. As shown, the client device 220 is connected to the industrial device 510A. Upon connecting, and thereby establishing the first secure channel 204 with the industrial device 510A, the GUI 500C may be provided to the client device 220. From the GUI 500C, a user can select option 513 to send the updated configuration information to the industrial device 510A, option 515 to save the configuration information to the client device 220, or option 511 to clone the configuration information to another industrial device.

Figures 5D-E provide GUIS 500D and 500E, respectively. The GUIS 500D and 50E illustrate displays that may be provided via the client device 220 when a user is establishing the second secure channel 206 with the end-point device 230. In this example, the end-point device 230 may be a cloud service. Specifically, as illustrated, the cloud service is provided by MyAutomation. For example, a user may request technical support to address issues with the industrial device 510A. To receive technical support, the user sends the configuration information for the industrial device 510A to TroubleShooters provided by MyAutomation.

To establish the second secure channel 206, a user of the client device 220 logs in via MyAutomation portal, as shown by GUI 500D. The login portal may be provided via an application executing on the client device 220 or may be a web-based application. The second secure channel 206 may be established once the login information is validated. The GUI 500E of Figure 5E illustrates a display that may be provided to the client device 220 once the second secure channel 206 is established.

Turning now to Figures 5F-5G, the GUIs 500F-G illustrate displays that may be provided if the option 513 is selected to transmit the updated configuration information to the industrial device 510A. As shown, the GUI 500F shows that the industrial device 510A is connected to the client device 220. The GUI 500F also provides various files 517 containing updated configuration information received from the end-point device 230. A user viewing the GUI 500F can select a desired updated configuration information from the files 517. Here, the user selects the file 519 containing the updated configuration information of the industrial device 510A.

The GUI 500G provides a display requesting that the user confirms overwriting the current configuration. It should be appreciated that in some cases, the overwriting of the current configuration with the updated configuration information may be automatically performed by the industrial device 510A upon receipt of the file 519. As shown, the GUI 500G shows that the file 519 is selected for the industrial device 510A. The GUI 500G includes a confirm option 521 and a save a backup option 523. If the user selects the confirm option 521, then the GUI 500H is provided. A shown, the GUI 500H shows that the file 519 is being transmitted to the industrial device 510A. If the user selects, the save a backup option 523, then the user may be directed to the GUIs 500L-O.

Referring now to Figures 5I-K, GUIs 500I-K are provided illustrating various displays that may be provided via the client device 220 responsive to transmitting the updated configuration information to the industrial device 510A. As illustrated, if the transfer is completed and the updated configuration information is received by the industrial device 510A, then the GUI 500I may be provided. If the transfer is unsuccessful, then the GUI 500J may be provided. And if the client device 220 does not have permission to transfer the updated configuration information to the industrial device 510A, then the GUI 500K may be provided.

As noted above, if the user selects the option 523 from GUI 500G, then the GUIs 500L-O on Figures 5L-5O may be provided via the client device 220. In other words, the GUIs 500L-O illustrate a flow for saving the updated configuration information for the industrial device 510A to the client device 220. As shown, to save the updated configuration information to the client device 220, the configuration file may first be read by the software application executed on the client device 220, as illustrated by the GUI 500L. Next, a user may be able to name a file associated with the updated configuration information, as shown by GUI 500M. The GUI 500N illustrates a display showing that the updated configuration information is being saved to the client device, and the GUI 500O indicates that the transfer (e.g., save process) is completed.

Referring now to Figures 5P-5DD, GUIs 500P-DD illustrate a flow for cloning or coping configuration information between industrial devices. For example, a user may select option 511 from Figures 5B or 5C and be subsequently provided with one or more GUIs 500P-DD. Starting with Figure 5P, the GUI 500P indicates that the configuration information is copied from the industrial device 510A. Next, the GUI 500Q illustrates that the software application executed on the client device 220 is reading the configuration information. Reading the configuration information, as used herein, can include translating a format of the configuration information (e.g., into or out of a format that is readable by the industrial device) and/or may mean validating the configuration information. For example, the configuration information may include a binary command protocol that is validated before being transferred to a new industrial device. At Figure 5R, the GUI 500R allows the user to name a file associated with the copied configuration information and determine a location to save the file. Once the transfer of the copied configuration information to the client device 220 is completed, the GUI 500S is provided.

Once the configuration information from the industrial device 510A is copied to the client device 220, the client device 220 may determine which end-point device 230 to transfer the copied configuration information to. In the illustrated example, the end-point device 230 is another industrial device, such as the industrial device 110B. Prior to transferring the copied configuration information to the industrial device 110B, the client device 220 first establishes a connection with the industrial device 110B. As shown by Figure 5T, the GUI 500T providing available industrial devices 525 is provided. At the GUI 500U, a user may select a desired industrial device, such as the industrial device 110B, and select a desired connection method. Figure 5V provides GUI 500V showing that the client device 220 is establishing a connection with an industrial device 510B, which may be the same or similar to the industrial device 110B. Figure 5W illustrates GUI 500W providing a request to confirm a device passkey 527. By confirming the device passkey 527, the second secure channel 206 is established between the client device 220 and the industrial device 510B. That is, the device passkey 527 may be part of a two-part authentication or encryption process that establishes a secure channel between the client device 220 and the industrial device 510B. The GUI 500X of Figure 5X provides confirmation that the second secure channel 206 is established between the client device 220 and the industrial device 510B.

Figures 5Y-5AA provide GUIs 500Y-AA illustrating an alternative method for connecting to the industrial device 510B. As illustrated by GUIs 500Y-AA, the second secure channel 206 established between the industrial device 510B and the client device 220 is a WiFi connection. Figure 5Y provides the GUI 500Y directing a user to confirm whether lights on the industrial device 510B are flashing, thereby indicating that the industrial device 510B is available via a network for connection. Figure 5Z provides the GUI 500Z which indicates that the client device 220 is connecting to the industrial device 510B. And Figure 5AA provides the GUI 500AA confirming that the second secure channel is established with the industrial device 510B.

Once the seconds secure channel 206 is established between the industrial device 510B and the client device 220, either via the connection method illustrated in Figures 5T-5X or the connection method illustrated in Figures 5Y-5AA, the flow for cloning the configuration information from the industrial device 510A continues to Figures 5BB-5DD. Figure 5BB illustrates GUI 500B which requests confirmation to overwrite the current confirmation of the industrial device 510B. The confirmation includes the option 521 to confirm the overwrite instructions and the option 523 to save a backup of the current configuration information. The options 521 and 523 may be the same as the options provided and discussed above with respect to Figure 5G, except with respect to the industrial device 510B.

If the option 521 to confirm the instructions to overwrite the current configuration information is selected, then the GUI 500CC of Figure 5CC is provided. The GUI 500CC indicates that the configuration information is being sent to the industrial device 510B. Figure 5DD provides the GUI 500DD confirming that the transfer of the configuration information is completed. That is, the configuration information from the industrial device 510A that was cloned is successfully transferred to the industrial device 510B, and the current configuration information of the industrial device 510B is updated with the cloned configuration information.

Referring now to Figure 6, an example industrial device 600 is provided, according to an embodiment herein. As illustrated, the industrial device 600 includes a communications interface (I/F) system 602, a power source 604, and a user I/F system 606.The communications I/F system 602 is a component that enables communication capabilities for the industrial device 600. For example, the communications I/F system 602 may include an NFC chip or an antenna (not shown) that allows the industrial device 600 to establish the short-range protocol connection 122 with the client device 120. In some embodiments, the communications I/F system 602 can provide the industrial device 600 with WiFi capabilities. As will be described in greater detail below, the communications I/F system 602 may have power harvesting capabilities.

The power source 604 provides power to the industrial device 600 when in a powered-on state. The power source 604 may be or include any variety of power sources, such as batteries, A/C power, D/C power, solar panels, and the like. The user I/F system 606 may be or include a display or UI that allows a user to interact with the industrial device 600, for example, by manually adjusting operating parameters of the industrial device 600.

In some cases, the industrial device 600 may include a controller 608 (e.g., one or more processors), storage system 610, and software 612. The software 612 may be operating software that is stored in the storage system 610 that, when executed by the controller 608, causes the industrial device 600 to perform one or more functions. For example, an operating profile may be stored as instructions in the storage system 610 that, when executed by the controller 608, cause the industrial device 600 to operate a piece of industrial equipment (e.g., conveyor belt, motor) according to the operating profile. The storage system 610 may include any computer readable storage media readable by the controller 608 and capable of storing software 612. The storage system 610 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In some embodiments, the industrial device 600 may receive configuration information, such as the configuration information 674, from the client device 120 when in a powered-off state. When the industrial device 600 receives the configuration information 674 in a powered-off state, the configuration information 674 may be temporarily stored by the communications I/F system 602. For example, if the communications I/F system 602 includes an NFC chip, then the communications I/F system 602 may have power harvesting capabilities. As such, the communications I/F system 602 is able to store the configuration information 674 using the residual power harvested by the NFC chip. Once the industrial device 600 is powered on, the configuration information 674 is transferred to the storage system 610 for permanent storage. That is, once the industrial device 600 is powered on, a current configuration that is stored in the storage system 610 is updated to the configuration information 674. In cases where the industrial device 600 receives the configuration information 674 in a powered-on state, then the configuration information 674 may be automatically updated and stored in the storage 610.

Turning now to **Figure 7,** Figure 7 illustrates a computing system 701 that may be used for providing one or more functions of the configuration process, as described herein. For example, the client device 120 may be or include the computing system 701. As illustrated, the computing system 701 includes a processing system 702 that includes a microprocessor and other circuitry that retrieves and executes software 705 from storage system 703. The processing system 702 may be implemented within a single processing device but may also be distributed across multiple processing devices or sub-systems that cooperate in executing program instructions. Examples of the processing system 702 include general purpose central processing units, graphical processing units, application specific processors, and logic devices, as well as any other type of processing device, combinations, or variations thereof.

The storage system 703 may comprise any computer readable storage media readable by processing system 702 and capable of storing software 705. The storage system 703 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations the storage system 703 may also include computer readable communication media over which at least some of the software 705 may be communicated internally or externally. The storage system 703 may be implemented as a single storage device but may also be implemented across multiple storage devices or sub-systems co-located or distributed relative to each other. The storage system 703 may comprise additional elements, such as a controller capable of communicating with the processing system 702 or possibly other systems.

The software 705 (including configuration distribution process 706) may be implemented in program instructions and among other functions may, when executed by the processing system 702, direct the processing system 702 to operate as described with respect to the various operational scenarios, sequences, and processes illustrated herein. For example, the software 705 may include program instructions for providing the configuration distribution process as described herein. For example, the software 705 may include program instructions for providing one or more steps of the configuration distribution process 300.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. The software 705 may include additional processes, programs, or components, such as operating system software, virtualization software, or other application software. The software 705 may also comprise firmware or some other form of machine-readable processing instructions executable by the processing system 702.

In general, the software 705 may, when loaded into the processing system 702 and executed, transform a suitable apparatus, system, or device (of which computing system 701 is representative) overall from a general-purpose computing system into a special-purpose computing system customized to support insights features, functionality, and user experiences. Indeed, encoding the software 705 on the storage system 703 may transform the physical structure of the storage system 703. The specific transformation of the physical structure may depend on various factors in different implementations of this description. Examples of such factors may include, but are not limited to, the technology used to implement the storage media of the storage system 703 and whether the computer-storage media are characterized as primary or secondary storage, as well as other factors.

For example, if the computer readable storage media are implemented as semiconductor-based memory, the software 705 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 707 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between the computing system 701 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specifically-configured hardware, such as field-programmable gate array (FPGA) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more non-transitory computer-readable media, which may store processor-executable instructions that, when executed by the processor, can cause the processor to perform methods according to this disclosure as carried out, or assisted, by a processor. Examples of non-transitory computer-readable medium may include, but are not limited to, an electronic, optical, magnetic, or other storage device capable of providing a processor, such as the processor in a web server, with processor-executable instructions. Other examples of non-transitory computer-readable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code to carry out methods (or parts of methods) according to this disclosure.

Examples are described herein in the context of systems and methods for modifying configuration of industrial devices, in particular, a process for establishing a secure session between an industrial device and an end-point device. Those of ordinary skill in the art will realize that the foregoing description is illustrative only and is not intended to be in any way limiting. Reference is made to various implementations of examples as illustrated in the accompanying drawings. The same reference indicators are used throughout the drawings and the following description to refer to the same or like items.

In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

## Claims

1. A method of establishing a secure session between an industrial device and an end-point device, the method comprising:
establishing (305), by a client device (120; 220; 420), a first channel (204) with an industrial device (110A, 110B, 110C, 110D; 210A; 410A; 600), wherein the first channel is established using a short-range communication protocol;
extracting (310), by a software application executing on the client device, configuration information (458, 505, 674) for the industrial device via the first channel:
establishing (315), by the client device using the software application, a second channel (206) with an end-point device (230; 430);
generating (320), by the software application, modified configuration information (460) based on the configuration information extracted from the industrial device;
transmitting (325), by the client device, the modified configuration information to the end-point device via the second channel;
receiving, by the software application, updated configuration information from the end-point device via the second channel, wherein the updated configuration information is generated by the end-point device; **characterized in that** the method further comprises:
determining, by the software application, a binary command protocol for the industrial device from the updated configuration information;
validating, by the software application, the binary command protocol for the industrial device; and
transmitting, by the client device, the binary command protocol to the industrial device via the first channel.

2. The method of claim 1, wherein the method further comprises:
establishing, by the software application, the secure session between the industrial device and the end-point device via the first channel and the second channel, wherein the secure session comprises a bridge between the industrial device and the end-point device; and
automatically routing, by the software application, updated configuration information from the end-point device via the bridge to the industrial device, wherein the updated configuration information is generated by the end-point device.

3. The method of claim 1 or 2, wherein the method further comprises:
receiving, by the software application, updated configuration information from the end-point device via the second channel, wherein the updated configuration information is generated by the end-point device; and
routing, by the software application, the updated configuration information to the industrial device via the first channel.

4. The method of claim 1, wherein receiving, by the software application, the updated configuration information from the end-point device comprises receiving, by an email account associated with the client device, an email comprising the updated configuration information.

5. The method of one of claims 1 to 4, at least one of:
wherein the second channel is established via a Wide Area Network, WAN, connection;
wherein the end-point device comprises a cloud service; and
wherein the short-range communication protocol includes one of Bluetooth or near-field communication, NFC.

6. The method of one of claims 1 to 5, wherein generating, by the software application, the modified configuration information based on the configuration information extracted from the industrial device further comprises:
generating, by the software application, the modified configuration information based on the configuration information, wherein:
the configuration information comprises a first format;
the modified configuration information comprises a second format; and
the generating comprises translating the configuration information from the first format to the second format,
wherein preferably the second format consists of a short message service, SMS, or an email.

7. The method of one of claims 1 to 6, wherein establishing, by the client device, the first channel with the industrial device comprises:
exchanging tokens between the client device and the industrial device;
validating, by the client device, the exchange of tokens; and
establishing, by the client device, the first channel with the industrial device based on validation of the token exchange.

8. A non-transitory computer-readable medium comprising processor-executable instructions stored thereon that, upon execution by one or more processors, cause the one or more processors to:
extract (310), from an industrial device (110A, 110B, 110C, 110D; 210A; 410A; 600), configuration information (458, 505, 674) for the industrial device via a first channel (204) established (305) with the industrial device using a short-range communication protocol;
generate (320) modified configuration information (460) based on the configuration information extracted from the industrial device;
transmit (325), to an end-point device (230; 430), the modified configuration information via a second channel (206) established (305) with the end-point device;
receive updated configuration information from the end-point device via the second channel, wherein the updated configuration information is generated by the end point device;
**characterized in that** the instructions further cause the one or more processors to
determine a binary command protocol for the industrial device from the updated configuration information;
validate the binary command protocol for the industrial device; and
transmit the binary command protocol to the industrial device via the first channel.

9. The non-transitory computer-readable medium of claim 8, wherein the processor-executable instructions, upon execution by the one or more processors, further cause the one or more processors to:
establish a secure session between the industrial device and the end-point device via the first channel and the second channel, wherein the secure session comprises a bridge between the industrial device and the end-point device; and
automatically route, to the industrial device, updated configuration information from the end-point device via the bridge, wherein the updated configuration information is generated by the end-point device.

10. The non-transitory computer-readable medium of claim 8 or 9, wherein the processor-executable instructions, upon execution by the one or more processors, further cause the one or more processors to:
receive updated configuration information from the end-point device via the second channel, wherein the updated configuration information is generated by the end-point device; and
automatically route the updated configuration information to the industrial device via the first channel.

11. The non-transitory computer-readable medium of claim 8, wherein the processor-executable instructions to receive the updated configuration information from the end-point device via the second channel further cause, upon execution by the one or more processors, the one or more processors to:
extract the updated configuration information from one of an email or a short message service, SMS.

12. The non-transitory computer-readable medium of one of claims 8 to 11, wherein the processor-executable instructions to generate modified configuration information based on the configuration information extracted from the industrial device further cause, upon execution by the one or more processors, the one or more processors to:
generate the modified configuration information based on the configuration information, wherein:
the configuration information comprises a first format;
the modified configuration information comprises a second format; and
the generating comprises translating the configuration information from the first format to the second format.

13. The non-transitory computer-readable medium of one of claims 8 to 12, at least one of:
wherein the second channel is established via a Wide Area Network, WAN, connection;
wherein the first channel is established via a Bluetooth connection or a near-field communication, NFC, connection; and
wherein the end-point device comprises a cloud service.

## Patentansprüche

1. Verfahren zum Einrichten einer gesicherten Sitzung zwischen einer industriellen Vorrichtung und einer Endpunkt-Vorrichtung, wobei das Verfahren umfasst:
Einrichten (305) eines ersten Kanals (204) durch eine Client-Vorrichtung (120; 220; 420) mit einer industriellen Vorrichtung (110A, 110B, 110C, 110D; 210A; 410A; 600), wobei der erste Kanal unter Verwendung eines Nahbereichskommunikationsprotokolls eingerichtet wird;
Extrahieren (310) von Konfigurationsinformationen (458, 505, 674) für die industrielle Vorrichtung über den ersten Kanal durch eine auf der Client-Vorrichtung ausgeführte Software-Applikation:
Einrichten (315) eines zweiten Kanals (206) mit einer Endpunkt-Vorrichtung (230; 430) durch die Client-Vorrichtung unter Verwendung der Software-Applikation;
Erzeugen (320) modifizierter Konfigurationsinformationen (460) durch die Software-Applikation auf der Grundlage der von der industrielen Vorrichtung extrahierten Konfigurationsinformationen;
Senden (325) der modifizierten Konfigurationsinformationen durch die Client-Vorrichtung an die Endpunkt-Vorrichtung über den zweiten Kanal;
Empfangen aktualisierter Konfigurationsinformationen durch die Software-Applikation von der Endpunkt-Vorrichtung über den zweiten Kanal, wobei die aktualisierten Konfigurationsinformationen von der Endpunkt-Vorrichtung erzeugt werden;
**dadurch gekennzeichnet, dass** das Verfahren weiterhin umfasst:
Bestimmen eines binären Befehlsprotokolls für die industrielle Vorrichtung durch die Software-Applikation anhand der aktualisierten Konfigurationsinformationen;
Validieren des binären Befehlsprotokolls für die industrielle Vorrichtung durch die Software-Applikation; und
Senden des binären Befehlsprotokolls durch die Client-Vorrichtung an die industrielle Vorrichtung über den ersten Kanal.

2. Verfahren nach Anspruch 1, wobei das Verfahren weiterhin umfasst:
Einrichten einer gesicherten Sitzung zwischen der industriellen Vorrichtung und der Endpunkt-Vorrichtung über den ersten und den zweiten Kanal durch die Software-Applikation, wobei die gesicherte Sitzung eine Brücke zwischen der industriellen Vorrichtung und der Endpunkt-Vorrichtung umfasst; und
automatisches Weiterleiten aktualisierter Konfigurationsinformationen von der Endpunkt-Vorrichtung über die Brücke an die industrielle Vorrichtung durch die Software-Applikation, wobei die aktualisierten Konfigurationsinformationen von der Endpunkt-Vorrichtung erzeugt werden.

3. Verfahren nach Anspruch 1 oder 2, wobei das Verfahren weiterhin umfasst:
Empfangen aktualisierter Konfigurationsinformationen von der Endpunkt-Vorrichtung über den zweiten Kanal durch die Software-Applikation, wobei die aktualisierten Konfigurationsinformationen von der Endpunkt-Vorrichtung erzeugt werden; und
Weiterleiten der aktualisierten Konfigurationsinformationen an die industrielle Vorrichtung über den ersten Kanal durch die Software-Applikation.

4. Verfahren nach Anspruch 1, bei dem das Empfangen der aktualisierten Konfigurationsinformationen von der Endpunkt-Vorrichtung durch die Software-Applikation das Empfangen einer E-Mail, die die aktualisierten Konfigurationsinformationen enthält, durch ein der Client-Vorrichtung zugeordnetes E-Mail-Konto umfasst.

5. Verfahren nach einem der Ansprüche 1 bis 4, bei dem wenigstens eines der folgenden Merkmale zutrifft:
der zweite Kanal wird über eine WAN-Verbindung (WAN - Weitbereichsnetzwerk) hergestellt;
die Endpunkt-Vorrichtung umfasst einen Cloud-Dienst; und
das Kurzstrecken-Kommunikationsprotokoll umfasst entweder Bluetooth oder Nahfeldkommunikation (NFC).

6. Verfahren nach einem der Ansprüche 1 bis 5, bei dem das Erzeugen der modifizierten Konfigurationsinformationen durch die Software-Applikation auf der Grundlage der aus der industriellen Vorrichtung extrahierten Konfigurationsinformationen weiterhin umfasst:
Erzeugen der modifizierten Konfigurationsinformationen durch die Software-Applikation auf der Grundlage der Konfigurationsinformationen, wobei:
die Konfigurationsinformationen ein erstes Format umfassen;
die modifizierten Konfigurationsinformationen ein zweites Format umfassen; und
das Erzeugen das Übersetzen der Konfigurationsinformationen von dem ersten Format in das zweite Format umfasst,
wobei das zweite Format vorzugsweise aus einem Short Message Service (SMS) oder einer E-Mail besteht.

7. Verfahren nach einem der Ansprüche 1 bis 6, bei dem das Einrichten des ersten Kanals mit der industriellen Vorrichtung durch die Client-Vorrichtung umfasst:
Austauschen von Tokens zwischen der Client-Vorrichtung und der industriellen Vorrichtung;
Validieren des Token-Austauschs durch die Client-Vorrichtung; und
Herstellen des ersten Kanals mit der industriellen Vorrichtung durch die Client-Vorrichtung auf der Grundlage der Validierung des Token-Austauschs.

8. Nicht-flüchtiges, computerlesbares Medium, das darauf gespeicherte, von einem Prozessor ausführbare Anweisungen enthält, die bei Ausführung durch einen oder mehrere Prozessoren bewirken, dass der eine oder die mehreren Prozessoren:
aus einer industriellen Vorrichtung (110A, 110B, 110C, 110D; 210A; 410A; 600) Konfigurationsinformationen (458, 505, 674) für die industrielle Vorrichtung über einen ersten Kanal (204) extrahieren (310), der unter Verwendung eines Nahbereichskommunikationsprotokolls mit der industriellen Vorrichtung hergestellt wurde (305);
modifizierte Konfigurationsinformationen (460) auf der Grundlage der aus der industriellen Vorrichtung extrahierten Konfigurationsinformationen erzeugen (320);
die modifizierten Konfigurationsinformationen an eine Endpunkt-Vorrichtung (230; 430) über einen zweiten Kanal (206), der mit der Endpunkt-Vorrichtung eingerichtet (305) wurde, senden (325); und
aktualisierte Konfigurationsinformationen von der Endpunkt-Vorrichtung über den zweiten Kanal empfangen, wobei die aktualisierten Konfigurationsinformationen von der Endpunkt-Vorrichtung erzeugt werden;
**dadurch gekennzeichnet, dass** die Anweisungen den einen oder die mehreren Prozessoren weiterhin veranlassen:
ein binäres Befehlsprotokoll für die industrielle Vorrichtung aus den aktualisierten Konfigurationsinformationen zu bestimmen;
das binäre Befehlsprotokoll für die industrielle Vorrichtung zu validieren; und
das binäre Befehlsprotokoll über den ersten Kanal an die industrielle Vorrichtung zu senden.

9. Nichtflüchtiges, computerlesbares Medium nach Anspruch 8, bei dem die von einem oder mehreren Prozessoren ausführbaren Anweisungen bei ihrer Ausführung durch den einen oder die mehreren Prozessoren diese weiterhin veranlassen:
eine gesicherte Sitzung zwischen der industriellen Vorrichtung und der Endpunkt-Vorrichtung über den ersten Kanal und den zweiten Kanal herzustellen, wobei die gesicherte Sitzung eine Brücke zwischen der industriellen Vorrichtung und der Endpunkt-Vorrichtung umfasst; und
aktualisierte Konfigurationsinformationen von der Endpunkt-Vorrichtung über die Brücke automatisch an die industrielle Vorrichtung weiterzuleiten, wobei die aktualisierten Konfigurationsinformationen von der Endpunkt-Vorrichtung erzeugt werden.

10. Nicht-flüchtiges, computerlesbares Medium nach Anspruch 8 oder 9, bei dem die prozessorausführbaren Anweisungen bei Ausführung durch den einen oder die mehreren Prozessoren den einen oder die mehreren Prozessoren weiterhin veranlassen:
aktualisierte Konfigurationsinformationen von der Endpunkt-Vorrichtung über den zweiten Kanal zu empfangen, wobei die aktualisierten Konfigurationsinformationen von der Endpunkt-Vorrichtung erzeugt werden; und
die aktualisierten Konfigurationsinformationen automatisch über den ersten Kanal an die industrielle Vorrichtung weiterzuleiten.

11. Nichtflüchtiges, computerlesbares Medium nach Anspruch 8, bei dem die prozessorausführbaren Anweisungen zum Empfangen der aktualisierten Konfigurationsinformationen von der Endpunkt-Vorrichtung über den zweiten Kanal bei Ausführung durch den einen oder die mehreren Prozessoren den einen oder die mehreren Prozessoren weiterhin veranlassen:
die aktualisierten Konfigurationsinformationen aus einer E-Mail oder einer SMS (Short Message Service) zu extrahieren.

12. Nichtflüchtiges, computerlesbares Medium nach einem der Ansprüche 8 bis 11, bei dem die prozessorausführbaren Anweisungen zum Erzeugen modifizierter Konfigurationsinformationen auf der Grundlage der aus der industriellen Vorrichtung extrahierten Konfigurationsinformationen bei Ausführung durch den einen oder die mehreren Prozessoren weiterhin bewirken, dass der eine oder die mehreren Prozessoren:
die modifizierten Konfigurationsinformationen auf der Grundlage der Konfigurationsinformationen erzeugen, wobei:
die Konfigurationsinformationen ein erstes Format umfassen;
die modifizierten Konfigurationsinformationen ein zweites Format umfassen; und
das Erzeugen das Übersetzen der Konfigurationsinformationen von dem ersten Format in das zweite Format umfasst.

13. Nichtflüchtiges, computerlesbares Medium nach einem der Ansprüche 8 bis 12, bei dem wenigstens einer der folgenden Punkte zutrifft:
der zweite Kanal wird über eine WAN-Verbindung (WAN - Weitbereichsnetzwerk) hergestellt;
der erste Kanal wird über eine Bluetooth-Verbindung oder eine NFC-Verbindung (NFC - Nahfeldkommunikation) hergestellt; und
die Endpunkt-Vorrichtung umfasst einen Cloud-Dienst.

## Revendications

1. Procédé permettant d'établir une session sécurisée entre un dispositif industriel et un dispositif d'extrémité, le procédé comprenant :
l'établissement (305), par un dispositif client (120 ; 220 ; 420), d'un premier canal (204) avec un dispositif industriel (110A, 110B, 110C, 110D ; 210A ; 410A ; 600), dans lequel le premier canal est établi en utilisant un protocole de communication à courte portée ;
l'extraction (310), par une application logicielle s'exécutant sur le dispositif client, d'informations de configuration (458, 505, 674) pour le dispositif industriel via le premier canal ;
l'établissement (315), par le dispositif client en utilisant l'application logicielle, d'un second canal (206) avec un dispositif d'extrémité (230 ; 430) ;
la génération (320), par l'application logicielle, d'informations de configuration modifiées (460) sur la base des informations de configuration extraites du dispositif industriel ;
la transmission (325), par le dispositif client, des informations de configuration modifiées au dispositif d'extrémité via le second canal ;
la réception, par l'application logicielle, d'informations de configuration mises à jour provenant du dispositif d'extrémité via le second canal, dans lequel les informations de configuration mises à jour sont générées par le dispositif d'extrémité ;
**caractérisé en ce que** le procédé comprend en outre :
la détermination, par l'application logicielle, d'un protocole de commande binaire pour le dispositif industriel à partir des informations de configuration mises à jour ;
la validation, par l'application logicielle, du protocole de commande binaire pour le dispositif industriel ; et
la transmission, par le dispositif client, du protocole de commande binaire au dispositif industriel via le premier canal.

2. Procédé selon la revendication 1, dans lequel le procédé comprend en outre :
l'établissement, par l'application logicielle, de la session sécurisée entre le dispositif industriel et le dispositif d'extrémité via le premier canal et le second canal, dans lequel la session sécurisée comprend un pont entre le dispositif industriel et le dispositif d'extrémité ; et
l'acheminement automatique, par l'application logicielle, d'informations de configuration mises à jour depuis le dispositif d'extrémité vers le dispositif industriel via le pont, dans lequel les informations de configuration mises à jour sont générées par le dispositif d'extrémité.

3. Procédé selon la revendication 1 ou 2, dans lequel le procédé comprend en outre :
la réception, par l'application logicielle, d'informations de configuration mises à jour provenant du dispositif d'extrémité via le second canal, dans lequel les informations de configuration mises à jour sont générées par le dispositif d'extrémité ; et
l'acheminement, par l'application logicielle, des informations de configuration mises à jour vers le dispositif industriel via le premier canal.

4. Procédé selon la revendication 1, dans lequel la réception, par l'application logicielle, des informations de configuration mises à jour provenant du dispositif d'extrémité comprend la réception, par un compte de messagerie électronique associé au dispositif client, d'un courrier électronique comprenant les informations de configuration mises à jour.

5. Procédé selon l'une des revendications 1 à 4 :
dans lequel le second canal est établi via une connexion à un réseau étendu, WAN ; et/ou
dans lequel le dispositif d'extrémité comprend un service infonuagique ; et/ou
dans lequel le protocole de communication à courte portée comprend soit le Bluetooth, soit la communication en champ proche, NFC.

6. Procédé selon l'une des revendications 1 à 5, dans lequel la génération, par l'application logicielle, des informations de configuration modifiées sur la base des informations de configuration extraites du dispositif industriel comprend en outre :
la génération, par l'application logicielle, des informations de configuration modifiées sur la base des informations de configuration, dans lequel :
les informations de configuration sont dans un premier format ;
les informations de configuration modifiées sont dans un second format ; et
la génération comprend la conversion des informations de configuration du premier format vers le second format,
dans lequel, de préférence, le second format consiste en un service de messages courts, SMS, ou en un courrier électronique.

7. Procédé selon l'une des revendications 1 à 6, dans lequel l'établissement, par le dispositif client, du premier canal avec le dispositif industriel comprend :
l'échange de jetons entre le dispositif client et le dispositif industriel ;
la validation, par le dispositif client, de l'échange de jetons ; et
l'établissement, par le dispositif client, du premier canal avec le dispositif industriel sur la base de la validation de l'échange de jetons.

8. Support non transitoire lisible par ordinateur sur lequel sont stockées des instructions exécutables par processeur qui, lorsqu'elles sont exécutées par un ou plusieurs processeurs, amènent le ou les plusieurs processeurs à :
extraire (310), à partir d'un dispositif industriel (110A, 110B, 110C, 110D ; 210A ; 410A ; 600), des informations de configuration (458, 505, 674) pour le dispositif industriel via un premier canal (204) établi (305) avec le dispositif industriel en utilisant un protocole de communication à courte portée ;
générer (320) des informations de configuration modifiées (460) sur la base des informations de configuration extraites du dispositif industriel ;
transmettre (325), à un dispositif d'extrémité (230 ; 430), les informations de configuration modifiées via un second canal (206) établi (305) avec le dispositif d'extrémité ;
recevoir des informations de configuration mises à jour provenant du dispositif d'extrémité via le second canal, dans lequel les informations de configuration mises à jour sont générées par le dispositif d'extrémité ;
**caractérisé en ce que** les instructions amènent en outre le ou les plusieurs processeurs à :
déterminer un protocole de commande binaire pour le dispositif industriel à partir des informations de configuration mises à jour ;
valider le protocole de commande binaire pour le dispositif industriel ; et
transmettre le protocole de commande binaire au dispositif industriel via le premier canal.

9. Support non transitoire lisible par ordinateur selon la revendication 8, dans lequel les instructions exécutables par processeur, lorsqu'elles sont exécutées par le ou les plusieurs processeurs, amènent en outre le ou les plusieurs processeurs à :
établir une session sécurisée entre le dispositif industriel et le dispositif d'extrémité via le premier canal et le second canal, dans lequel la session sécurisée comprend un pont entre le dispositif industriel et le dispositif d'extrémité ; et
acheminer automatiquement, vers le dispositif industriel, des informations de configuration mises à jour provenant du dispositif d'extrémité via le pont, dans lequel les informations de configuration mises à jour sont générées par le dispositif d'extrémité.

10. Support non transitoire lisible par ordinateur selon la revendication 8 ou 9, dans lequel les instructions exécutables par processeur, lorsqu'elles sont exécutées par le ou les plusieurs processeurs, amènent en outre le ou les plusieurs processeurs à :
recevoir des informations de configuration mises à jour provenant du dispositif d'extrémité via le second canal, dans lequel les informations de configuration mises à jour sont générées par le dispositif d'extrémité ; et
acheminer automatiquement les informations de configuration mises à jour vers le dispositif industriel via le premier canal.

11. Support non transitoire lisible par ordinateur selon la revendication 8, dans lequel les instructions exécutables par processeur pour recevoir les informations de configuration mises à jour provenant du dispositif d'extrémité via le second canal amènent en outre, lorsqu'elles sont exécutées par le ou les plusieurs processeurs, le ou les plusieurs processeurs à :
extraire les informations de configuration mises à jour d'un courrier électronique ou d'un service de minimessages, SMS.

12. Support non transitoire lisible par ordinateur selon l'une des revendications 8 à 11, dans lequel les instructions exécutables par processeur pour générer des informations de configuration modifiées sur la base des informations de configuration extraites du dispositif industriel amènent en outre, lorsqu'elles sont exécutées par le ou les plusieurs processeurs, le ou les plusieurs processeurs à :
générer les informations de configuration modifiées sur la base des informations de configuration, dans lequel :
les informations de configuration sont dans un premier format ;
les informations de configuration modifiées sont dans un second format ; et
la génération comprend la conversion des informations de configuration du premier format vers le second format.

13. Support non transitoire lisible par ordinateur selon l'une des revendications 8 à 12,
dans lequel le second canal est établi via une connexion à un réseau étendu, WAN ; et/ou
dans lequel le premier canal est établi via une connexion Bluetooth ou une connexion en communication en champ proche, NFC ; et/ou
dans lequel le dispositif d'extrémité comprend un service infonuagique.
